# EUROPÄISCHE PATENTSCHRIFT

(11) **EP 2 491 603 B1**
(45) Veröffentlichungstag und Bekanntmachung des Hinweises auf die Patenterteilung: **30.01.2013**
(21) Anmeldenummer: 10732883.3
(22) Anmeldetag: 16.07.2010
(51) Int. Cl.: H01M 2/02

(54) **GALVANISCHES ELEMENT ALS GERÄTEBATTERIE**
GALVANIC ELEMENT AS A DEVICE BATTERY
ELÉMENT GALVANIQUE SERVANT DE BATTERIE D'APPAREIL

(30) Priorität: 20.10.2009 DE 102009049890
(43) Veröffentlichungstag der Anmeldung: 29.08.2012
(73) Patentinhaber: H&T Marsberg GmbH & Co. KG, 34431 Marsberg (DE)
(72) Erfinder: SEEFELDT, Volker, 34431 Marsberg (DE)
(74) Vertreter: Cohausz Hannig Borkowski Wißgott
(86) Internationale Anmeldenummer: PCT/EP2010/004341
(87) Internationale Veröffentlichungsnummer: WO 2011/047742

(56) Entgegenhaltungen:
- EP-A2- 1 028 480
- WO-A2-02/084761
- DE-A1-102007 018 259
- DE-A1-102007 020 290
- US-A1- 2004 137 322

## Beschreibung

Die Erfindung betrifft ein Gehäuse für ein galvanisches Element als Gerätebatterie mit einem äußeren Becher aus Metall oder Kunststoff, der außenseitig beschichtet ist.

Becherförmige Hohlkörper, die einen geschlossenen Boden aufweisen, werden als Gehäuse für galvanische Elemente (Gerätebatterien) verwendet. Aus Korrosionsgründen und aus Gründen einer verbesserten Kontaktierung besitzen diese Gehäuse eine galvanische Oberflächenbeschichtung aus Nickel oder aus einer Nickel / Kobalt Beschichtung. Hierbei ist es bekannt, die Gehäuse entweder aus galvanisch nickelbeschichtetem oder Nickel / Kobalt beschichtetem Blech (NPS) in einem Tiefziehprozess herzustellen oder unbeschichtetes, tiefziehfähiges Blech mit dem gleichen Tiefziehprozess in die Gehäuseform zu bringen und anschließend galvanisch als Schüttgut galvanisch zu beschichten.

Der zylindrische Teil des Gehäuses muss in einem weiteren Prozess bei der Herstellung einer Batterie außen isoliert werden. Eine Isolierung wird durch die Verwendung eines Kunststoffetikettes oder durch einen Schrumpfschlauch erreicht. Unabhängig davon, welche Isoliermethode angewendet wird, ist das Gehäuse stets ganzflächig galvanisch beschichtet.

Aus der DE 10 2007 020 290 A1 ist es bekannt, ein zur Aufnahme von Kondensatorwickeln vorgesehenes becherförmiges Gehäuse außen vollständig oder teilweise mit einer Schicht aus kupferhaltigem Material zu versehen. Eine innenseitige Beschichtung ist nicht vorgesehen. ferner ist aus der US 2004/0137322 ein becherförmiges Gehäuse für eine Batterie bekannt, bei dem nur die Außenseite im Bereich des Bodens mit Nickel beschichtet ist.

Aufgabe der Erfindung ist es, ein galvanisches Element der eingangs genannten Art so zu verbessern, dass bei einfacher Herstellung eine Materialeinsparung gegeben ist.

Diese Aufgabe wird erfindungsgemäß dadurch gelöst, dass der Becher innen- und außenseitig mit Nickel oder Zinn oder Kobalt oder mit einer Nickel oder Kobalt aufweisenden Legierung beschichtet ist, und dass die äußere Beschichtung nur in beiden Endbereichen des Bechers angeordnet ist und der äußere Zwischenbereich zwischen beiden Endbereichen frei von einer Beschichtung ist.

Hierdurch wird erheblich an Beschichtungsmaterial eingespart. Die erfindungsgemäße Lehre macht sich zu Nutze, dass für die Funktion des Gehäuses eines galvanischen Elements (Batterie) es prinzipiell nur nötig ist, den Polbereich zu vernickeln, um eine einwandfreie Kontaktierung zu gewährleisten.

Vorzugsweise wird vorgeschlagen, dass die Länge der Endbereichbeschichtungen jeweils 1/20 bis 1/3 der gesamten axialen Länge des Bechers beträgt.

Auch wird vorgeschlagen, dass die Dicke der Beschichtungen innen und außen unterschiedlich ausgeführt ist. Ferner können die Beschichtungsmaterialien der Beschichtungen innen und außen unterschiedlich sein.

Der nicht beschichtete Bereich kann entweder unbehandelt bleiben oder durch verschiedene Maßnahmen wie dem Aufbringen von Rostschutzmittel vor Korrosion geschützt werden. Funktionsbedingt ist es von Vorteil, wenn die Außenseite des Bechers über die gesamte Länge des Bechers bis auf die Kontakte mit einer isolierenden Schicht bedeckt ist, die auch beide Endbereichsbeschichtungen überdeckt. Hierbei kann die isolierende Schicht einen Lack und/oder ein Klebeetikett und/oder einen Kunststoffschrumpfschlauch oder eine Kombination daraus aufweisen.

Die oben genannten Vorteile machen sich besonders stark bemerkbar bei dem erfindungsgemäßen Verfahren zum Herstellen eines Gehäuses für ein galvanisches Element, wobei nach Herstellung des Bechers aus Metall oder Kunststoff, dieser innenseitig vollständig und außenseitig derart teilweise beschichtet wird, dass nur die beiden äußeren Endbereiche mit Nickel oder Zink oder mit einer Nickel oder Zinn oder Kobalt oder mit einer Nickel oder Kobalt aufweisenden Legierung beschichtet werden und ein zwischen den Becherendbereichen befindlicher Zwischenbereich frei von einer Beschichtung bleibt, wobei die Länge der Endbereichbeschichtungen jeweils 1/20 bis 1/3 der gesamten axialen Länge des Bechers beträgt und danach die Becheraußenseite über die gesamte Länge des Bechers bis auf die Kontakte mit einer isolierenden Schicht bedeckt ist, die auch beide Endbereichsbeschichtungen überdeckt.

Bei dem erfindungsgemäßen Gehäuse bzw. Becher und insbesondere beim Herstellungsverfahren ist besonders vorteilhaft die Vorrichtung und das Oberflächenbehandlungsverfahren anwendbar, das aus der US 2006/0118411 bekannt ist.

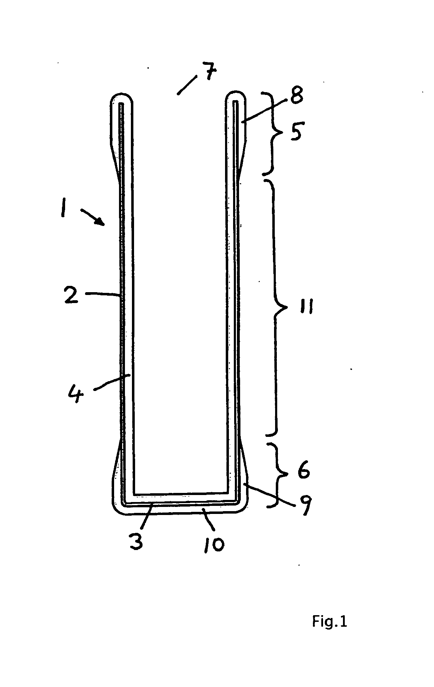

Ein Ausführungsbeispiel der Erfindung ist in der Zeichnung in einem axialen Längsschnitt dargestellt und wird im Folgenden näher beschrieben.

Das Gehäuse eines galvanischen Elementes weist einen Becher 1 auf mit einer zylindrischen, rohrförmigen Seitenwand 2, die an einem Ende durch einen angeformten Boden 3 geschlossen ist. Seitenwand und Boden bestehen aus Metall oder Kunststoff. Alle Innenflächen des Gehäuses weisen eine lückenlose innere Beschichtung 4 auf aus Nickel oder Zinn oder Kobalt oder aus einer Nickel oder Kobalt aufweisenden Legierung insbesondere aus einer Nickel-KobaltLegierung.

Auch die Außenseiten des Behälters weisen eine Beschichtung aus diesem Material auf. Diese äußere Beschichtung bedeckt aber nur beide Endbereiche 5, 6 des becherförmigen Behälters, d. h. die an die Becheröffnung 7 angrenzende äußere Beschichtung 8 des ersten Endbereichs 5 verläuft über etwa 1/6 der Becherlänge und die äußere Beschichtung 9 des an den Boden 3 angrenzenden zweiten Endbereichs 6 verläuft wiederum über etwa 1/6 der Becherlänge und geht in die äußere Beschichtung 10 des Bodens über.

Zwischen beiden äußeren Beschichtungen 8, 9 verbleibt ein von einer Beschichtung freier Bereich 11 von etwa 2/3 der Becherlänge. Die Längenverhältnisse der äußeren Beschichtungen 8, 9 zur Länge des nicht beschichten Bereichs 11 können je nach Bedarf und technischen Anforderungen sehr unterschiedlich sein. So kann die Länge der Endbereichbeschichtungen 8, 9 jeweils 1/20 bis 1/3 der gesamten axialen Länge des Bechers 1 betragen.

Nach dem Aufbringen der Beschichtungen 4, 8 und 9 wird die gesamte zylindrische Außenfläche mit Ausnahme der Bodenaußenseite 10 mit einer isolierenden Schicht bedeckt, die in der Zeichnung nicht dargestellt ist. Diese Schicht ist ein Lack, ein Klebeetikett oder ein Kunststoffschrumpfschlauch oder eine Kombination daraus.

Die Dicke der Beschichtungen 4,8,9 kann innen und außen unterschiedlich sein. Auch können die Beschichtungsmaterialien der Beschichtungen 4,8,9 innen und außen unterschiedlich sein.

Das erfindungsgemäße teilweise Beschichten der Becheraußenseite und das Beschichten der Becherinnenseite ist besonders vorteilhaft mit einer Anlage durchführbar, wie sie in der US-Patentschrift 2006/0118411 beschrieben ist.

## Patentansprüche

1. Gehäuse für ein galvanisches Element als Gerätebatterie mit einem äußeren Becher (1) aus Metall oder Kunststoff, der außenseitig beschichtet ist, **dadurch gekennzeichnet**, dassderBecherinnen-und außenseitig mit Nickel oder Zinn oder Kobalt oder mit einer Nickel oder Kobalt aufweisenden Legierung beschichtet ist, und dass die äußere Beschichtung (8,9) nur in beiden Endbereichen (5, 6) des Bechers (1) angeordnet ist und der äußere Zwischenbereich (11) zwischen beiden Endbereichen frei von einer Beschichtung ist.

2. Gehäuse nach Anspruch 1, **dadurch gekennzeichnet, dass** die Länge der Endbereichbeschichtungen (8, 9) jeweils 1/20 bis 1/3 der gesamten axialen Länge des Bechers (1) beträgt.

3. Gehäuse nach Anspruch 1 und 2, **dadurch gekennzeichnet, dass** die Dicke der Beschichtungen (4,8,9) innen und außen unterschiedlich ausgeführt ist.

4. Gehäuse nach den Ansprüchen 1 und 2, **dadurch gekennzeichnet, dass** die Beschichtungsmaterialien der Beschichtungen (4,8,9) innen und außen unterschiedlich sind.

5. Gehäuse nach einem der Ansprüche, **dadurch gekennzeichnet, dass** die Außenseite des Bechers (1) über die gesamte Länge des Bechers bis auf die Kontakte mit einer isolierenden Schicht bedeckt ist, die auch beide Endbereichsbeschichtungen (8,9) überdeckt.

6. Gehäuse nach Anspruch 5, **dadurch gekennzeichnet, dass** die isolierende Schicht einen Lack und/oder ein Klebeetikett und/oder einen Kunststoffschrumpfschlauch oder eine Kombination daraus aufweist.

7. Verfahren zum Herstellen eines Gehäuses für ein galvanisches Element nach einem der vorherigen Ansprüche, **dadurch gekennzeichnet, dass** nach Herstellung des Bechers aus Metall oder Kunststoff, dieser innenseitig vollständig und außenseitig derart teilweise beschichtet wird, dass nur die beiden äußeren Endbereiche mit Nickel oder Zinn oder Kobalt oder mit einer Nickel oder Kobalt aufweisenden Legierung beschichtet werden und ein zwischen den Becherendbereichen befindlicher Zwischenbereich frei von einer Beschichtung bleibt, wobei die Länge der Endbereichbeschichtungen (8, 9) jeweils 1/20 bis 1/3 der gesamten axialen Länge des Bechers (1) beträgt und danach die Becheraußenseite über die gesamte Länge des Bechers bis auf die Kontakte mit einer isolierenden Schicht bedeckt ist, die auch beide Endbereichsbeschichtungen (8, 9) überdeckt.

## Claims

1. Casing for a galvanic element as a device battery with an outer cup (1) made of metal or plastic material which is externally coated, **characterized in that** the cup is coated internally and externally with nickel or tin or cobalt or with an alloy containing nickel or cobalt, and **in that** the outer coating (8, 9) is arranged only in the two end regions (5, 6) of the cup (1) and the intermediate outer region (11) between the two end regions is uncoated.

2. Casing according to Claim 1, **characterized in that** the lengths of the end region coatings (8, 9) are in each case 1/20 to 1/3 of the total axial length of the cup (1).

3. Casing according to Claims 1 and 2, **characterized in that** the coatings (4, 8, 9) on the inside and on the outside are of different thickness.

4. Casing according to Claims 1 and 2, **characterized in that** the coatings (4, 8, 9) on the inside and on the outside are of different material.

5. Casing according to any one of the claims, **characterized in that** the exterior of the cup (1) is covered over the entire length of the cup, apart from the contacts, with an insulating layer which also overlaps the two end region coatings (8, 9).

6. Casing according to Claim 5, **characterized in that** the insulating layer comprises a lacquer and/or adhesive label and/or heatshrinking plastic sleeve, or a combination thereof.

7. Process for the manufacture of a casing for a galvanic element according to any one of the preceding claims, **characterized in that** after the metal or plastic cup has been produced it is coated completely on the inside and partly on the outside, so that only the two outer end regions are coated, with nickel or tin or cobalt or with an alloy containing nickel or cobalt, and an intermediate region between the ends remains uncoated, the lengths of the end region coatings (8, 9) being in each case 1/20 to 1/3 of the total axial length of the cup (1), and the exterior of the cup then being covered over the entire length of the cup, apart from the contacts, with an insulating layer which also overlaps the two end region coatings (8, 9).

## Revendications

1. Boîtier pour un élément galvanique servant de batterie portative, comprenant un récipient extérieur (1) en métal ou en matière plastique, revêtu du côté extérieure, **caractérisé en ce que** le récipient est revêtu du côté intérieur et du côté extérieure de nickel ou d'étain ou de cobalt ou d'un alliage renfermant du nickel ou du cobalt, et que le revêtement extérieur (8, 9) n'est disposé que dans les deux zones d'extrémité (5 ,6) du récipient (1) et la zone intermédiaire extérieure (11) entre les deux zones d'extrémité est dépourvue de revêtement.

2. Boîtier selon la revendication 1, **caractérisé en ce que** la longueur des revêtements (8, 9) des zones d'extrémité représente respectivement 1/20 à 1/3 de la longueur axiale totale du récipient (1).

3. Boîtier selon l'une des revendications 1 et 2, **caractérisé en ce que** l'épaisseur des revêtements (4, 8, 9) est réalisée différemment du côté intérieur et du côté extérieur.

4. Boîtier selon les revendications 1 et 2, **caractérisé en ce que** les matériaux de revêtement des revêtements (4, 8, 9) sont différents intérieurement et extérieurement.

5. Boîtier selon l'une des revendications précédentes, **caractérisé en ce que** le côté extérieur du récipient (1) est recouvert d'une couche isolante sur toute la longueur du récipient, à l'exception des contacts, laquelle couche recouvre également les deux revêtements (8, 9) des zones d'extrémité.

6. Boîtier selon la revendication 5, **caractérisé en ce que** la couche isolante présente une laque et/ou une vignette adhésive et/ou une gaine thermo-rétractable en matière plastique ou une combinaison de ces dernières.

7. Procédé de fabrication d'un boîtier pour un élément galvanique selon l'une des revendications précédentes, **caractérisé en ce que**, après la fabrication du récipient en métal ou en matière plastique, ce dernier est revêtu totalement du côté intérieur et en partie du côté extérieur de telle sorte que seules les deux zones d'extrémité extérieures sont revêtues de nickel ou d'étain ou de cobalt ou d'un alliage renfermant du nickel ou du cobalt et une zone intermédiaire, située entre les zones d'extrémité du récipient, reste dépourvue de revêtement, la longueur des revêtements (8, 9) des zones d'extrémité représentant respectivement 1/20 à 1/3 de la longueur axiale totale du récipient (1), puis le côté extérieur du récipient est recouvert d'un couche isolante sur la longueur totale du récipient, à l'exception des contacts, laquelle couche recouvre également les deux revêtements (8, 9) des zones d'extrémité.
